# EUROPÄISCHE PATENTSCHRIFT

(11) **EP 1 899 883 B1**
(45) Veröffentlichungstag und Bekanntmachung des Hinweises auf die Patenterteilung: **01.01.2020**
(21) Anmeldenummer: 06754566.5
(22) Anmeldetag: 26.06.2006
(51) Int. Cl.: G06F 21/77, G06F 21/79

(54) **VERFAHREN ZUM SCHUTZ VERTRAULICHER DATEN**
METHOD FOR PROTECTING CONFIDENTIAL DATA
PROCÉDÉ DE PROTECTION DE DONNÉES CONFIDENTIELLES

(30) Priorität: 27.06.2005 DE 102005030072
(43) Veröffentlichungstag der Anmeldung: 19.03.2008
(73) Patentinhaber: Giesecke+Devrient Mobile Security GmbH, 81677 München (DE)
(72) Erfinder: HEINRICH, Hans-Jürgen, 81929 München (DE)
(86) Internationale Anmeldenummer: PCT/EP2006/006130
(87) Internationale Veröffentlichungsnummer: WO 2007/000296

(56) Entgegenhaltungen:
- EP-A2- 1 333 352
- WO-A-2005/038633

## Beschreibung

Die Erfindung betrifft ein Verfahren zum Schutz vertraulicher Daten. Weiterhin betrifft die Erfindung einen tragbaren Datenträger.

Es ist zum Teil von erheblicher Bedeutung, sicherzustellen, dass vertrauliche Informationen oder sonstige vertrauliche Daten nicht von einem unberechtigten Dritten gelesen werden. Hierzu sind bereits verschiedene Maßnahmen bekannt, die unberechtigte Lesezugriffe auf die Informationen verhindern und lediglich den dazu Berechtigten auf die Informationen zugreifen lassen. Häufig wird davon ausgegangen, dass die Schutzmaßnahmen wirksam sind, ohne dies näher zu prüfen. Insbesondere bei sehr hohen Sicherheitsanforderungen kann aber auch ein Interesse daran bestehen, zu prüfen, ob tatsächlich kein Lesezugriff stattgefunden hat. Auch in Fällen, in denen die Informationen nicht oder nur in einem sehr geringen Maß gegen unberechtigte Zugriffe geschützt sind, kann die Beantwortung der Frage, ob ein Lesezugriff stattgefunden hat, von Interesse sein.

Eine bekannte Möglichkeit, einen Lesezugriff auf vertrauliche Informationen festzustellen, besteht darin, ein Siegel zu verwenden. Beispielsweise können Dokumente in einem versiegelten Briefumschlag aufbewahrt werden. Um die Dokumente lesen zu können, muss der Briefumschlag geöffnet werden. Dabei werden das Siegel und/oder der Briefumschlag beschädigt, so dass erkennbar ist, dass die Dokumente möglicherweise gelesen wurden. Außer solchen mechanischen Siegeln sind auch bereits elektronische Siegel bekannt.

So offenbart die DE 298 13 738 U1 ein elektronisches Siegel, das an einem Gegenstand befestigt wird. Das Siegel weist eine Detektionseinrichtung und einen IC auf, der die Detektionseinrichtung überwacht und eine manipulative Einwirkung auf das Siegel dokumentiert. Die Detektionseinrichtung besteht beispielsweise aus einer Leiterbahn, die beim Entfernen des Siegels vom Gegenstand durchtrennt wird.

Aus der DE 199 21 524 A1 ist ein Verfahren zur Inbetriebnahme einer Prozessor-Chipkarte in einem Netzwerk zur Nachrichtenübermittlung bekannt. Auf der Chipkarte ist eine Applikation gespeichert, welche den Ablauf beim Ersteinsatz der Chipkarte durch den Kartenbenutzer steuert. Mittels Zugriff auf einen geheimen Speicher prüft die Applikation ob es sich um einen Ersteinsatz der Chipkarte handelt. Bei einem Ersteinsatz und einer positiven Bestätigung durch den Benutzer ändert die Applikation die Information über den Ersteinsatz im geheimen Speicher.

Die EP 1 333 352 A2 offenbart einen Mechanismus zum Verwalten von Daten und einen entsprechenden Datenträger. Der Mechanismus weist einen manupulationssicheren Taktgeber und einen Speicher zum Aufzeichnen von Informationen auf, welche im Zusammenhang mit einem Zugriff auf den Datenträger stehen. Es wird eine zeitabhängige Checksumme gebildet, welche den Informationen beigefügt wird, wodurch jeder Lesevorgang unterscheidbar markiert wird.

In der WO 2005/038633 A ist eine Einrichtung und ein Verfahren zur Sicherung und Überwachung von geschützten Daten beschrieben. Es wird eine Anzahl der Zugriffe auf geschützte Daten innerhalb eines Zeitintervalls ermittelt, sodass ein Unberechtigter eine begrenzte Anzahl an Zugriffsversuchen hat.

Der Erfindung liegt die Aufgabe zugrunde, ein unbemerktes Lesen vertraulicher Daten durch einen unberechtigten Dritten zu verhindern.

Diese Aufgabe wird durch ein Verfahren mit der Merkmalskombination des Anspruchs 1 und einen tragbaren Datenträger gemäß Anspruch 3 gelöst.

Beim erfindungsgemäßen Verfahren zum Schutz vertraulicher Daten werden die Daten in einem Speicher eines tragbaren Datenträgers gespeichert. Den gespeicherten Daten wird eine Zustandsinformation zugeordnet. Die Zustandsinformation wird wenigstens bei einem ersten Lesezugriff auf die Daten geändert, wobei auf die Daten in dem Speicher und auf die zugehörigen Zustandsinformationen nur mittels einer Prozessoreinheit zugegriffen werden kann.

Das erfindungsgemäße Verfahren hat den Vorteil, dass damit auf einfache und zuverlässige Weise ermittelt werden kann, ob ein Lesezugriff auf vertrauliche Daten stattgefunden hat.

In der Zustandsinformation kann der Zeitpunkt des Lesezugriffs vermerkt werden, so dass eine nähere Information bezüglich des Lesezugriffs vorliegt.

Der erfindungsgemäße tragbare Datenträger weist einen Speicher auf, in dem Daten gespeichert sind, und eine Prozessoreinheit. Die Besonderheit des erfindungsgemäßen tragbaren Datenträgers besteht darin, dass im Speicher eine Zustandsinformation abgelegt ist, die wenigstens einer Teilmenge der gespeicherten Daten zugeordnet ist und angibt, ob bereits wenigstens ein Lesezugriff auf die Daten stattgefunden hat, wobei auf die Daten in dem Speicher und auf die zugehörigen Zustandsinformationen nur mittels der Prozessoreinheit zugegriffen werden kann.

Insbesondere gibt die Zustandsinformation an, ob bereits wenigstens ein Lesezugriff von außerhalb des tragbaren Datenträgers auf die Daten stattgefunden hat. Dies würde bedeuten, dass die Daten außerhalb des tragbaren Datenträgers bekannt geworden wären.

Bei einem bevorzugten Ausführungsbeispiel des erfindungsgemäßen tragbaren Datenträgers sind die Daten mittels einer Lesefunktionalität aus dem Speicher auslesbar, die beim Auslesen der Daten die den Daten zugeordnete Zustandsinformation verändert. Insbesondere sind die Daten, denen die Zustandsinformation zugeordnet ist, ausschließlich mit dieser Lesefunktionalität auslesbar. Dadurch lässt sich mit einfachen Mittel ein hoher Sicherheitsstandard erreichen.

Die Zustandsinformation kann insbesondere angeben, ob ein Lesezugriff auf die Daten seit einem vorgegebenen Ereignis stattgefunden hat. Beispielsweise kann die Zugriffsinformation angeben, ob ein Lesezugriff auf die Daten seit dem Einschreiben der Daten in den Speicher stattgefunden hat. Ebenso kann die Zustandsinformation angeben, ob ein Lesezugriff auf die Daten seit einem Versiegeln der in den Speicher eingeschriebenen Daten stattgefunden hat. Somit eignet sich der erfindungsgemäße tragbare Datenträger für viele unterschiedliche Anwendungsfälle, bei denen die Randbedingungen, unter denen der Lesezugriff jeweils registriert werden soll, unterschiedlich gestaltet sind.

Vorzugsweise ist die Zustandsinformation gegen unbefugte Veränderung gesichert, um eine zuverlässige Aussage über einen Lesezugriff zu ermöglichen. Insbesondere kann die Zustandsinformation kryptographisch gesichert sein. Dabei ist es von Vorteil, wenn die Zustandsinformation auslesbar ist, damit beispielsweise ein Benutzer des tragbaren Datenträgers feststellen kann, ob ein Lesezugriff stattgefunden hat.

Der Speicher des erfindungsgemäßen tragbaren Datenträgers kann beispielsweise als ein nichtflüchtiger Speicher, insbesondere als ein EEPROM, ausgebildet sein. Der erfindungsgemäße tragbare Datenträger ist vorzugsweise als eine Chipkarte ausgebildet. Dies hat den Vorteil, dass ein hohes Sicherheitsniveau sehr kostengünstig realisierbar ist. Ein weiterer Vorteil besteht darin, dass eine Chipkarte leicht von einer Person mitgeführt und auch platzsparend aufbewahrt werden kann.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Es zeigen:
- Fig. 1: ein stark vereinfachtes Blockschaltbild für ein Ausführungsbeispiel einer erfindungsgemäßen Chipkarte und
- Fig. 2: eine vereinfachte Darstellung des nichtflüchtigen Speichers.

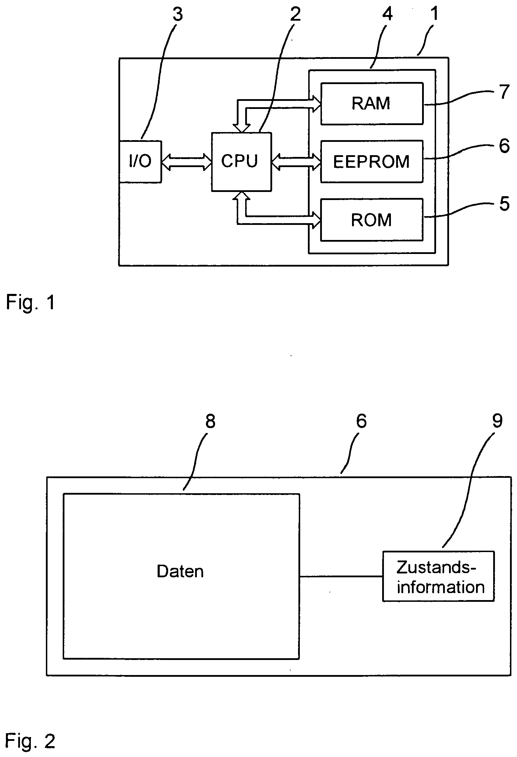

Fig. 1 zeigt ein stark vereinfachtes Blockschaltbild für ein Ausführungsbeispiel einer erfindungsgemäßen Chipkarte 1. Die Chipkarte 1 weist eine Prozessoreinheit 2 auf, welche die Funktionsabläufe der Chipkarte 1 steuert und auch als Central Processing Unit, abgekürzt CPU, bezeichnet wird. Weiterhin weist die Chipkarte 1 eine Schnittstelle 3 zur Ein- und Ausgabe von Daten und einen Speicher 4 auf. Beim dargestellten Ausführungsbeispiel besteht der Speicher 4 aus einem Permanentspeicher 5, einem nichtflüchtigen Speicher 6 und einem flüchtigen Speicher 7. Alternativ dazu ist auch ein anderer Aufbau des Speichers 4 möglich. Die Prozessoreinheit 2 ist mit der Schnittstelle 3, dem Permanentspeicher 5, dem nichtflüchtigen Speicher 6 und dem flüchtigen Speicher 7 verbunden. Die Schnittstelle 3 dient der Kommunikation mit externen Geräten, die durch eine berührende Kontaktierung der Chipkarte 1 und/oder kontaktlos abgewickelt werden kann.

Im Permanentspeicher 5 sind Daten abgelegt, die während der gesamten Lebensdauer des tragbaren Datenträgers 1 unverändert erhalten bleiben.

Dabei wird der Begriff Daten im folgenden sehr allgemein im Sinne beliebiger Informationen unabhängig von deren Inhalt verwendet und es werden darunter beispielsweise Programme, Parameter, personenbezogene Angaben, Schlüssel usw. subsumiert. Insbesondere ist im Permanentspeicher 5 das Betriebssystem des tragbaren Datenträgers 1 gespeichert.

Der flüchtige Speicher 7 dient als Arbeitsspeicher für die Prozessoreinheit 2, so dass geheime Daten beispielsweise bei der Durchführung von Berechnungen im flüchtigen Speicher 7 zwischengespeichert werden. Im flüchtigen Speicher 7 bleibt der Speicherinhalt nur solange erhalten, wie der tragbare Datenträger 1 mit einer Betriebspannung versorgt wird.

Der nichtflüchtige Speicher 6 kann während der Lebensdauer der Chipkarte 1 immer wieder neu beschrieben werden. Der jeweilige Speicherinhalt bleibt auch dann erhalten, wenn die Chipkarte 1 nicht mit der Betriebsspannung versorgt wird. Im nichtflüchtigen Speicher 6 sind beispielsweise Ergänzungen zum Betriebssystem, Anwendungssoftware, Schlüssel, personenbezogene Daten usw. abgelegt.

Ein Auslesen von Daten aus dem Speicher 4 wird von der Prozessoreinheit 2 gesteuert. Die ausgelesenen Daten werden beispielsweise über die Schnittstelle 3 an einen nicht figürlich dargestellten Kartenleser weitergeleitet oder auf einer nicht figürlich dargestellten Anzeige der Chipkarte 1 angezeigt. Dabei ist ein Auslesen des Speichers 4 jeweils nur über die Prozessoreinheit 2 möglich. An der Prozessoreinheit 2 vorbei kann der Speicher 4 - zumindest im Hinblick auf Speicherinhalte, die im vorliegenden Zusammenhang von Interesse sind - nicht ausgelesen werden. Der Auslesevorgang wird anhand von Fig. 2 näher erläutert.

Fig. 2 zeigt eine vereinfachte Darstellung des nichtflüchtigen Speichers 6. Der nichtflüchtige Speicher 6 weist mehrere Dateien 8 auf, die auch als Elementary Files bezeichnet werden und von denen aus Gründen der Übersicht in Fig. 2 nur eine dargestellt ist. Die in der Datei 8 gespeicherten Daten können verschlüsselt, digital signiert, mit Integritätsinformationen versehen oder auf sonstige Weise kryptographisch abgesichert sein. Für die Datei 8 ist eine Zustandsinformation in einer Zusatzdatei 9 im nichtflüchtigen Speicher 6 gespeichert. Die Zustandsinformation gibt an, ob bereits ein Lesezugriff auf die Datei 8 erfolgt ist.

Dabei kann jeder Lesezugriff seit Anlegen der Datei 8 berücksichtigt werden. Ebenso ist es auch möglich, dass sich ein Lesezugriff auf die Datei 8 nur dann in der Zustandinformation niederschlägt, wenn dieser nach einem bestimmten Ereignis stattgefunden hat. Ein solches Ereignis kann beispielsweise ein Versiegeln der Datei 8 sein, durch das der Schutz der Datei 8 aktiviert wird, so dass ein danach durchgeführter Lesezugriff registriert wird.

Bei der Zustandsinformation kann es sich im einfachsten Fall um ein einzelnes Bit handeln. Beispielsweise kann der Wert 0 bedeuten, dass die Datei 8 noch nicht gelesen wurde und der Wert 1, dass sie bereits gelesen wurde. Alternativ dazu kann die Zustandsinformation auch in Form einer Bytefolge realisiert sein. Die Bytefolge kann kryptographisch abgesichert sein und beispielsweise das Datum des Lesezugriffs auf die Datei 8 angeben.

Bei einem Lesezugriff auf die Datei 8 wird die Zustandsinformation so geändert, dass daraus hervorgeht, dass die Datei 8 gelesen wurde. Diese Änderung der Zustandsinformation erfolgt zwangsläufig und kann nicht durch äußere Einwirkungen auf die Chipkarte 1 verhindert werden. Ebenso wenig kann die Zustandsinformation durch äußere Einwirkungen auf die Chipkarte 1 geändert werden, zumindest nicht in einer Weise, dass sie dann einen ungelesenen Zustand der Datei 8 anzeigt.

Bei dem in Fig. 1 dargestellten Ausführungsbeispiel der Chipkarte 1 kann auf die Datei 8 und auf die zugehörige Zusatzdatei 9 nur mittels der Prozessoreinheit 2 zugegriffen werden. Ein Zugriff unter Umgehung der Prozessoreinheit 2 ist nicht möglich. Dabei ist die Prozessoreinheit 2 so programmiert, dass sie bei einem Lesezugriff auf die Datei 8 zwangsläufig auch auf die zugehörige Zusatzdatei 9 zugreift und die Zustandsinformation entsprechend ändert. Mit anderen Worten, der Lesebefehl, der von der Prozessoreinheit 2 ausgeführt wird ist so implementiert, dass bei seiner Ausführung sowohl die Daten der Datei 8 gelesen als auch die Zustandsinformation der Zusatzdatei 9 geändert wird.

Um festzustellen, ob bereits ein Lesezugriff auf die Datei 8 stattgefunden hat, ist lediglich die in der Zusatzdatei 9 gespeicherte Zustandsinformation auszuwerten. Hierzu kann die Zustandsinformation beispielsweise mit Hilfe eines Kartenlesers ausgegeben werden oder auf einer Anzeige der Chipkarte 1 angezeigt werden.

Für den Einsatz des erfindungsgemäßen Verfahrens ist es nicht erforderlich, dass die Chipkarte 1, wie in Fig. 1 dargestellt, einen Mikrocontroller aufweist. Stattdessen eignen sich auch vergleichsweise einfach ausgebildete Chipkarten 1, die über eine Schnittstelle 3 verfügen, in der ein Befehl zum Lesen der Datei 8 und Ändern der zugehörigen Zustandsinformation sowie ein Befehl zum Lesen der Zugriffsinformation implementiert sind. Bei einer derart ausgebildeten Chipkarte 1 ist die Schnittstelle 3 direkt mit dem Speicher 4, insbesondere mit dem nichtflüchtigen Speicher 6, verbunden und ein Lesezugriff auf den Speicher 4 ist ausschließlich über die Schnittstelle 3 möglich.

Die Erfindung kann beispielsweise dazu eingesetzt werden, notarielle Informationen zu hinterlegen, wie zum Beispiel ein Testament, das erst nach dem Tod des Erblassers gelesen werden darf. Bei der Testamentseröffnung kann dann geprüft werden, ob bereits ein Lesezugriff auf das Testament stattgefunden hat.

Eine weitere Anwendungsmöglichkeit der Erfindung besteht in der Hinterlegung von Passwörtern. Dabei kann ein Zugriff auf die Passwörter zugelassen werden, beispielsweise um einem Vertreter des Passwortinhabers in dessen Abwesenheit in dringenden Fällen eine Nutzung eines Passworts zu ermöglichen. Der Zugriff auf das Passwort wird durch das erfindungsgemäße Verfahren in Form einer Änderung der Zustandsinformation der Passwortdatei registriert und dadurch dem Passwortinhaber zur Kenntnis gebracht. Der Passwortinhaber kann dann entsprechend reagieren, beispielsweise indem er sein Passwort ändert.

Darüber hinaus existiert eine Vielzahl weiterer Anwendungsmöglichkeiten der Erfindung, bei denen eine zuverlässige Dokumentation eines Lesezugriffs auf vertrauliche Daten gewünscht wird.

## Patentansprüche

1. Verfahren zum Schutz vertraulicher Daten, wobei
- die Daten in einem Speicher (4) einer Chipkarte (1) (1) gespeichert werden,
- den in einer Datei gespeicherten Daten (8) eine Zustandsinformation zugeorndet und in einer zugehörigen Zusatzdatei (9) gespeichert wird und
- die in der zugehörigen Zustandsdatei (9) gespeicherte Zustandsinformation bei einem ersten Lesezugriff auf die Daten geändert wird, wobei nur mittels einer Prozessoreinheit (2) der Chipkarte (1) auf in der Datei gespeicherten Daten (8) und die in der zugehörigen Zusatzdatei gespeicherten Zustandsinformation zugegriffen wird.

2. Verfahren nach Anspruch 1, **dadurch gekennzeichnet, dass** in der Zustandsinformation der Zeitpunkt des Lesezugriffs vermerkt wird.

3. Chipkarte (1) mit einer Prozessoreinheit (2) und einem Speicher (4), in dem Daten (8) in einer Datei und eine Zustandsinformation in einer zugehörigen Zusatzdatei (9), die wenigstens einer Teilmenge der gespeicherten Daten (8) zugeordnet ist, gespeichert ist und angibt, ob bereits wenigstens ein Lesezugriff auf die Daten stattgefunden hat, wobei nur mittels der Prozessoreinheit (2) der Chipkarte (1) auf in der Datei gespeicherten Daten (8) und die in der zugehörigen Zusatzdatei (9) gespeicherten Zustandsinformation zugegriffen wird und die Zustandsinformation (9) geändert wird.

4. Chipkarte (1) nach Anspruch 3, **dadurch gekennzeichnet, dass** die Zustandsinformation angibt, ob bereits wenigstens ein Lesezugriff von außerhalb der Chipkarte (1) auf die Daten stattgefunden hat.

5. Chipkarte (1) nach einem der Ansprüche 3 oder 4, **dadurch gekennzeichnet, dass** die Daten mittels einer Lesefunktionalität aus dem der Speicher (4) auslesbar sind, die beim Auslesen der Daten die den Daten zugeordnete Zustandsinformation verändert.

6. Chipkarte (1) nach Anspruch 5, **dadurch gekennzeichnet, dass** die Daten, denen die Zustandsinformation zugeordnet ist, ausschließlich mit dieser Lesefunktionalität auslesbar sind.

7. Chipkarte (1) nach einem der Ansprüche 3 bis 6, **dadurch gekennzeichnet, dass** die Zustandsinformation angibt, ob ein Lesezugriff auf die Daten seit einem vorgegebenen Ereignis stattgefunden hat.

8. Chipkarte (1) nach einem der Ansprüche 3 bis 7, **dadurch gekennzeichnet, dass** die Zugriffsinformation angibt, ob ein Lesezugriff auf die Daten seit dem Einschreiben der Daten in den Speicher (4) stattgefunden hat.

9. Chipkarte (1) nach einem der Ansprüche 3 bis 7, **dadurch gekennzeichnet, dass** die Zugriffsinformation angibt, ob ein Lesezugriff auf die Daten seit einem Versiegeln der in den Speicher (4) eingeschriebenen Daten stattgefunden hat.

10. Chipkarte (1) nach einem der Ansprüche 3 bis 9, **dadurch gekennzeichnet, dass** die Zustandsinformation gegen unbefugte Veränderung gesichert ist.

11. Chipkarte (1) nach Anspruch 10 **dadurch gekennzeichnet, dass** die Zustandsinformation kryptographisch gesichert ist.

12. Chipkarte (1) nach einem der Ansprüche 3 bis 11, **dadurch gekennzeichnet, dass** die Zustandsinformation auslesbar ist.

13. Chipkarte (1) nach einem der Ansprüche 3 bis 12, **dadurch gekennzeichnet, dass** der Speicher (4) als ein nichtflüchtiger Speicher (6), insbesondere als ein EEPROM, ausgebildet ist.

## Claims

1. Method for protecting confidential data, wherein
- the data are stored in a memory (4) of a chip card (1),
- a status information item is associated with the data stored in a file (8) and is stored in an appurtenant additional file (9), and
- the status information item stored in the appurtenant status file (9) is modified upon the first read access to the data, wherein the data (8) stored in the file and the status information item stored in the appurtenant additional file are accessed only by means of a processing unit (2) of the chip card (1).

2. The method according to claim 1, **characterized in that** the time point of the read access is recorded in the status information item.

3. The chip card (1) having a processing unit (2) and a memory (4), in which data (8) are stored in a file and a status information item in an appurtenant additional file (9) which is associated with at least a subset of the stored data (8) and states whether at least one read access to the data has already taken place, wherein the data (8) stored in the file and the status information item stored in the appurtenant additional file (9) are accessed and the status information item (9) is modified only by means of the processing unit (2) of the chip card (1).

4. The chip card (1) according to claim 3, **characterized in that** the status information item states whether already at least one read access to the data has taken place from outside of the chip card (1).

5. The chip card (1) according to any of claims 3 or 4, **characterized in that** the data are capable of being read out from the memory (4) by means of a read functionality which upon the readout of the data modifies the associated status information item.

6. The chip card (1) according to claim 5, **characterized in that** the data which the status information item is associated with are capable of being read out exclusively by this read functionality.

7. The chip card (1) according to any of claims 3 to 6, **characterized in that** the status information item states whether a read access to the data has taken place since a pre-specified event.

8. The chip card (1) according to any of claims 3 to 7, **characterized in that** the access information item states whether a read access to the data has taken place since the writing of the data to the memory (4).

9. The chip card (1) according to any of claims 3 to 7, **characterized in that** the access information item states whether since a locking of data written to the memory (4) a read access to the data has taken place.

10. The chip card (1) according to any of claims 3 to 9, **characterized in that** the status information item is secured against unauthorized modification.

11. The chip card (1) according to claim 10, **characterized in that** the status information item is cryptographically secured.

12. The chip card (1) according to any of claims 3 to 11, **characterized in that** the status information item is capable of being read out.

13. The chip card (1) according to any of claims 3 to 12, **characterized in that** the memory (4) is configured as a nonvolatile memory (6), in particular as an EEPROM.

## Revendications

1. Procédé de protection de données confidentielles, cependant que
- les données sont mémorisées dans une mémoire (4) d'une carte à puce (1),
- aux données (8) mémorisées dans un fichier, une information d'état est affectée et mémorisée dans un fichier supplémentaire (9) correspondant, et
- l'information d'état mémorisée dans le fichier d'état (9) correspondant est changée lors d'un premier accès en lecture aux données, cependant que c'est uniquement au moyen d'une unité à processeur (2) de la carte à puce (1) qu'il y a accès à des données (8) mémorisées dans le fichier et à l'information d'état mémorisée dans le fichier supplémentaire correspondant.

2. Procédé selon la revendication 1, **caractérisé en ce que**, dans l'information d'état, le moment de l'accès en lecture est mentionné.

3. Carte à puce (1) ayant une unité à processeur (2) et une mémoire (4) dans laquelle des données (8) sont mémorisées dans un fichier et une information d'état est mémorisée dans un fichier supplémentaire (9) correspondant affecté à au moins une quantité partielle des données (8) et indique si déjà au moins un accès en lecture aux données a eu lieu, cependant que c'est uniquement au moyen de l'unité à processeur (2) de la carte à puce (1) qu'il y a accès à des données (8) mémorisées dans le fichier et à l'information d'état mémorisée dans le fichier supplémentaire (9) correspondant et que l'information d'état (9) est changée.

4. Carte à puce (1) selon la revendication 3, **caractérisée en ce que** l'information d'état indique si déjà au moins un accès en lecture aux données a eu lieu depuis l'extérieur de la carte à puce (1).

5. Carte à puce (1) selon une des revendications 3 ou 4, **caractérisée en ce que** les données peuvent être lues depuis la mémoire (4) au moyen d'une fonction lecture qui, lors de la lecture des données, modifie l'information d'état affectée aux données.

6. Carte à puce (1) selon la revendication 5, **caractérisée en ce que** les données auxquelles est affectée l'information d'état peuvent être lues exclusivement avec cette fonction lecture.

7. Carte à puce (1) selon une des revendications de 3 à 6, **caractérisée en ce que** l'information d'état indique si un accès en lecture aux données a eu lieu depuis un événement prédéterminé.

8. Carte à puce (1) selon une des revendications de 3 à 7, **caractérisée en ce que** l'information d'accès indique si un accès en lecture aux données a eu lieu depuis l'écriture des données dans la mémoire (4).

9. Carte à puce (1) selon une des revendications de 3 à 7, **caractérisée en ce que** l'information d'accès indique si un accès en lecture aux données a eu lieu depuis le scellement des données écrites dans la mémoire (4).

10. Carte à puce (1) selon une des revendications de 3 à 9, **caractérisée en ce que** l'information d'état est sécurisée contre une modification non autorisée.

11. Carte à puce (1) selon la revendication 10, **caractérisée en ce que** l'information d'état est sécurisée cryptographiquement.

12. Carte à puce (1) selon une des revendications de 3 à 11, **caractérisée en ce que** l'information d'état peut être lue.

13. Carte à puce (1) selon une des revendications de 3 à 12, **caractérisée en ce que** la mémoire (4) est réalisée sous forme d'une mémoire non volatile (6), en particulier sous forme d'une EEPROM.
